# EUROPEAN PATENT APPLICATION

(11) **EP 4 478 733 A1**
(43) Date of publication of application: **18.12.2024**
(21) Application number: 24179957.6
(22) Date of filing: 04.06.2024
(51) Int. Cl.: H04Q 11/00

(54) **OPTICAL LINE TERMINAL, OPTICAL NETWORK UNIT, AND COMMUNICATION METHODS THEREOF**

(30) Priority: 12.06.2023 CN 202310694534
(71) Applicant: Nokia Solutions and Networks Oy, 02610 Espoo (FI)
(72) Inventor: GENG, Dan, Shanghai (CN); LU, Hai Jun, Shanghai (CN); VAN HOOF, Werner, 2630 Aartselaar (BE)
(74) Representative: DREISS Patentanwälte PartG mbB

(57) **Abstract**

Embodiments of the present disclosure relate to an optical line terminal (OLT), an optical network unit (ONU), communication methods, communication apparatuses, and computer-readable media. In an exemplary method, the OLT determines an optical communication capability of the OLT which includes at least one of the following: at least two upstream wavelength options supported by the OLT, a passive optical network (PON) mode associated with the OLT, and an upstream modulation format used by the OLT. In the method, the OLT further transmits, to the ONU, at least one indicator indicating the optical communication capability. In this way, the OLT can negotiate the optical communication capability with the ONU, thus avoiding data transmission failures or performance degradation caused by device incompatibility.

## Description

### CROSS-REFERENCE TO RELATED APPLICATION(S)

This application claims priority to Chinese Application No. 2023106945348 filed on June 12, 2023, the disclosures of which is incorporated herein by reference in its entity.

### FIELD

Embodiments of the present disclosure generally relate to the field of optical communication, and more particularly, to an optical line terminal (OLT), an optical network unit (ONU), communication methods, communication apparatuses, and computer-readable media.

### BACKGROUND

A Passive Optical Network (PON) typically refer a type of an optical distribution network (ODN) which does not require electronic components like power supplies. The PON typically includes an optical line terminal (OLT) mounted at a central control station, a group of matched optical network units (ONUs) mounted at a user site, and an optical distribution network (ODN). As technology evolves, the PON has increasingly high upstream and downstream transmission bandwidths. According to the relevant standards of International Telecommunication Union-U, Gigabit-Capable PON (GPON) is developed to XG (10G) PON and XGS PON, and is further developed into next generations of PONs of 25G PON and 50G PON.

Different generations of PONs have their own capabilities or work modes. There are scenarios where different generations of PONs co-exist, and therefore investigation on how an OLT and an ONU negotiate optical communication capabilities or work modes is needed.

### SUMMARY

In summary, the exemplary embodiments of the present disclosure relate to technical solutions for indicating and negotiating an optical communication capability between an optical line terminal (OLT) and an optical network unit (ONU).

In a first aspect of the present disclosure, an optical line terminal (OLT) is provided. The OLT includes at least one processor and at least one memory. The at least one memory stores instructions which, when executed by the at least one processor, cause the OLT to at least: determine an optical communication capability of the OLT, wherein the optical communication capability comprises at least one of the following: at least two upstream wavelength options supported by the OLT, a passive optical network (PON) mode associated with the OLT, and an upstream modulation format used by the OLT; and transmit, to an optical network unit (ONU), at least one indicator indicating the optical communication capability.

In a second aspect of the present disclosure, an optical network unit (ONU) is provided. The ONU includes at least one processor and at least one memory. The at least one memory stores instructions which, when executed by the at least one processor, cause the ONU to at least: receive, from an optical line terminal (OLT), at least one indicator indicating an optical communication capability of the OLT, wherein the optical communication capability comprises at least one of the following: at least two upstream wavelength options supported by the OLT, a passive optical network (PON) mode associated with the OLT, and an upstream modulation format used by the OLT; and perform optical communication between the ONU and the OLT based on the at least one indicator.

In a third aspect of the present disclosure, a communication method is provided. The method includes: determining, at an optical line terminal (OLT), an optical communication capability of the OLT, wherein the optical communication capability includes at least one of the following: at least two upstream wavelength options supported by the OLT, a passive optical network (PON) mode associated with the OLT, and an upstream modulation format used by the OLT; and transmitting, to an optical network unit (ONU), at least one indicator indicating the optical communication capability.

In a fourth aspect of the present disclosure, a communication method is provided. The method includes: receiving, at an optical network unit (ONU) and from an optical line terminal (OLT), at least one indicator indicating an optical communication capability of the OLT, wherein the optical communication capability comprises at least one of the following: at least two upstream wavelength options supported by the OLT, a passive optical network (PON) mode associated with the OLT, and an upstream modulation format used by the OLT; and performing optical communication between the ONU and the OLT based on the at least one indicator.

In a fifth aspect of the present disclosure, a communication apparatus is provided. The apparatus includes: means for determining, at an optical line terminal (OLT), an optical communication capability of the OLT, wherein the optical communication capability comprises at least one of the following: at least two upstream wavelength options supported by the OLT, a passive optical network (PON) mode associated with the OLT, and an upstream modulation format used by the OLT; and means for transmitting, to an optical network unit (ONU), at least one indicator indicating the optical communication capability.

In a sixth aspect of the present disclosure, a communication apparatus is provided. The apparatus includes: means for receiving, at an optical network unit (ONU) and from an optical line terminal (OLT), at least one indicator indicating an optical communication capability of the OLT, wherein the optical communication capability comprises at least one of the following: at least two upstream wavelength options supported by the OLT, a passive optical network (PON) mode associated with the OLT, and an upstream modulation format used by the OLT; and means for performing optical communication between the ONU and the OLT based on the at least one indicator.

In a seventh aspect of the present disclosure, a computer-readable medium having instructions stored thereon is provided. The instructions, when executed by a device, cause the device to at least: determine, at an optical line terminal (OLT), an optical communication capability of the OLT, wherein the optical communication capability comprises at least one of the following: at least two upstream wavelength options supported by the OLT, a passive optical network (PON) mode associated with the OLT, and an upstream modulation format used by the OLT; and transmit, to an optical network unit (ONU), at least one indicator indicating the optical communication capability.

In an eighth aspect of the present disclosure, a computer-readable medium having instructions stored thereon is provided. The instructions, when executed by a device, cause the device to at least: receive, at an optical network unit (ONU) and from an optical line terminal (OLT), at least one indicator indicating an optical communication capability of the OLT, wherein the optical communication capability comprises at least one of the following: at least two upstream wavelength options supported by the OLT, a passive optical network (PON) mode associated with the OLT, and an upstream modulation format used by the OLT; and perform optical communication between the ONU and the OLT based on the at least one indicator

In a ninth aspect of the present disclosure, a computer program including instructions is provided. The instructions, when executed by a device, cause the device to at least: determine, at an optical line terminal (OLT), an optical communication capability of the OLT, wherein the optical communication capability includes at least one of the following: at least two upstream wavelength options supported by the OLT, a passive optical network (PON) mode associated with the OLT, and an upstream modulation format used by the OLT; and transmitting, to an optical network unit (ONU), at least one indicator indicating the optical communication capability.

In a tenth aspect of the present disclosure, a computer program including instructions is provided. The instructions, when executed by a device, cause the device to at least: receive, at an optical network unit (ONU) and from an optical line terminal (OLT), at least one indicator indicating an optical communication capability of the OLT, wherein the optical communication capability comprises at least one of the following: at least two upstream wavelength options supported by the OLT, a passive optical network (PON) mode associated with the OLT, and an upstream modulation format used by the OLT; and perform optical communication between the ONU and the OLT based on the at least one indicator.

In an eleventh aspect of the present disclosure, an optical line terminal (OLT) is provided. The OLT includes: a determining circuitry configured to determine an optical communication capability of the OLT, wherein the optical communication capability includes at least one of the following: at least two upstream wavelength options supported by the OLT, a passive optical network (PON) mode associated with the OLT, and an upstream modulation format used by the OLT; and a transmitting circuitry configured to transmit, to an optical network unit (ONU), at least one indicator indicating the optical communication capability.

In a twelfth aspect of the present disclosure, an optical network unit (ONU) is provided. The ONU includes: a receiving circuitry configured to receive at least one indicator from an optical line terminal (OLT) indicating an optical communication capability of the OLT, wherein the optical communication capability includes at least one of the following: at least two upstream wavelength options supported by the OLT, a passive optical network (PON) mode associated with the OLT, and an upstream modulation format used by the OLT; and an optical communication circuitry configured to perform optical communication between the ONU and the OLT based on the at least one indicator.

It should be understood that the content described in the summary section is not intended to limit the key or important features of the embodiments of the present disclosure, and is not intended to limit the scope of the present disclosure. Aspects of the present disclosure will be easily understood through the following description.

### BRIEF DESCRIPTION OF THE DRAWINGS

FIG. 1 illustrates a block diagram of an exemplary communication system where the embodiments of the present disclosure can be implemented.
FIG. 2 illustrates an example of a communication process flow in accordance with some example embodiments of the present disclosure;
FIG. 3 illustrates a flowchart of a method implemented at an OLT according to some embodiments of the present disclosure.
FIG. 4 illustrates a flowchart of a method implemented at an ONU according to some embodiments of the present disclosure.
FIG. 5 illustrates an example simplified block diagram of a device that is suitable for implementing embodiments of the present disclosure.
FIG. 6 illustrates a schematic diagram of a computer-readable medium in accordance with some embodiments of the present disclosure.

Throughout the drawings, the same or similar reference numerals denote the same or similar elements.

### DETAILED DESCRIPTION OF EMBODIMENTS

The principle and spirit of the present disclosure will be described below by referring to several exemplary embodiments shown in the accompanying drawings. It should be understood that the descriptions of these specific embodiments are only to enable those skilled in the art to better understand and implement the present disclosure, and are not intended to limit the scope of the present disclosure in any way.

The term "include" and its variants as used herein mean widespread inclusion, namely, "including but not limited to". The term "based on" should be understood as "based at least in part on". The term "one embodiment" or "this embodiment" should be understood as "at least one embodiment". The terms "first", "second", and the like can refer to different or same objects. Other explicit and implicit definitions may also be included below.

As used herein, the term "determine" encompasses a variety of actions. For example, "determine" can include operation, calculation, processing, exporting, surveying, searching (such as searching a table, a database, or another data structure), investigation, and the like. In addition, "determine" may include receiving (for example, receiving information), accessing (for example, accessing data in a memory), and the like. In addition, "determine" can include parsing, selection, picking, establishment, and the like. As used herein, "at least one of the following: <a list of two or more elements>", "at least one of <a list of two or more elements>", and similar wordings, where the list of two or more elements is connected by "and" or "or", meaning at least any one of these elements, or at least any two or more of these elements, or at least all of the elements.

The term "circuit" used herein refers to one or more of the following: (a) implementation of only a hardware circuit (such as an implementation of an analog and/or digital circuit); (b) a combination of a hardware circuit and software, such as (if applicable): (i) a combination of an analog and/or digital hardware circuit and software/firmware, and (ii) any part of a hardware processor and software (including a digital signal processor, software, and a memory that work together to enable an apparatus such as an OLT or another computing device to perform various functions); and (c) a hardware circuit and/or processor, such as a microprocessor or a part of a microprocessor, that require software (such as firmware) for operation, but there will be no software if software is not required for operation.

The definition of circuit is applicable to all usage scenarios of this term in the present application (including claims). As another example, the term "circuit" used herein also covers an implementation of only a hardware circuit or processor (or a plurality of processors), or a portion of a hardware circuit or processor, or accompanying software or firmware. For example, if applicable to a specific claim symbol, the term "circuit" also covers similar integrated circuits in a baseband integrated circuit, a processor integrated circuit, an OLT, or other computing devices.

As mentioned above, different PONs have respective capabilities or work modes, for example, different operating wavelengths. The upstream wavelength range of a GPON is 1290-1310 nm; the upstream wavelength range of an XG(S)PON is 1260-1280 nm; the upstream wavelength range of a 25G PON has three options: Option 1 is 1260-1280 nm; Option 2 is 1290-1310 nm; and Option 3 is 1284-1288 nm. The ITU-U has defined 50G PON in the standard G9804, which has a downstream wavelength option and three upstream wavelength options, as shown in Table 1 below:

**Table 1**

| Option 1 | Option 2 | Option 3 |
|---|---|---|
| 1260-1280 nm | 1290-1310 nm | 1284-1288 nm |

Various types of 50G ONUs utilize different upstream wavelength options: Options 1, 2, or 3. Similarly, there are multiple types of 50G OLTs, each capable of receiving upstream signals on Option 1, 2, or 3, or even on multiple wavelength options. However, having too many OLT variants increases stock variety and operational costs, including those associated with maintenance.

The 50G PON may co-exist with different traditional PONs. Option 1 is configured to co-exist with the GPON; Option 2 is configured to co-exist with the XG(S)PON; Option 3 is configured to co-exist with the GPON or the XG(S)PON, or co-exist with both the GPON and the XG(S)PON. In a Multi-Source Agreement (MSA), the 25G PON is defined which can co-exist with different traditional PONs. Option 1 is configured to co-exist with the GPON; Option 2 is configured to co-exist with the XG(S)PON; Option 3 is configured to co-exist with the GPON or the XG(S)PON, or co-exist with both the GPON and the XG(S)PON.

The 50G/25G OLT knows its own receiving wavelength range, but the 50G/25G ONU does not know its own receiving wavelength range. This will cause some co-existence problems. For example, when the 50G PON co-exists with the XG(S)PON, the 50G OLT can support the 50G ONU using option 2 and the XG(S)PON to use 1260-1280 nm. If the 50G ONU using Option 1 is incorrectly connected to the PON, the 50G ONU will use Option 1 to transmit upstream data to respond to a serial number (SN) grant. This may conflict with an upstream signal of the XG(S)PON and may cause the XG(S)PON to go offline. The 50G PON OLT configured with Option 1 will be unable to receive an upstream signal from the 50G ONU, then the 50G ONU cannot be activated.

To reduce the stock types, the OLT can be designed to receive multiple wavelengths, namely one type of OLT (for example, a broadband OLT, supporting various wavelength options) and various types of ONUs in the PON. However, the ONUs are unaware of which types of ONUs in the PON can work.

To reduce the stock types, the ONUs can work in multiple PON modes. For example, the ONUs can work in the GPON mode or the XG PON mode, or, the ONUs can work in the XG(S)PON mode or the 25G PON mode, or work in the 25G or 50G PON mode.

There are still some problems. In different modes, the ONUs may use the same upstream wavelength. If the ONUs use a wrong PON mode, the OLT still cannot recognize data of the ONUs, which may cause an upstream data conflict. There are still some other problems. Under different optical link conditions, the ONUs may use different modulation methods to achieve different upstream rates. The ONUs may use the same upstream wavelength for different modulations. If the OLT and the ONUs use different modulation methods, the OLT cannot recognize the data of the ONUs, leading to an upstream data conflict.

Therefore, in the PON system, the OLT may have different capabilities and may work in different modes. The OLT may include broadband receivers to support different types of ONUs, and may further support different modulation formats to achieve different line rates and support different PON modes to operate under different generations of PONs. Therefore, the ONUs need to know the capability or work mode of the OLT, in order to maintain the consistent work mode with the OLT, otherwise, various data transmission exceptions or errors may be caused, resulting in performance degradation.

In view of above, the embodiments of the present disclosure provide solutions for an OLT to notify its capability to ONU(s). In an exemplary method, the OLT determines its optical communication capability. The optical communication capability may include at least two wavelength options supported by the OLT. The OLT then transmits, to one or more ONUs in a unicast or broadcast manner, an indicator indicating the determined wavelength options. The ONU receives the indicator from the OLT and performs an activation procedure based on the indicator. In some implementations, the ONU may perform the activation procedure of the ONU based on comparison between an upstream wavelength option supported by the ONU and the at least two upstream wavelength options indicated. If the wavelength option of the ONU itself matches a wavelength option supported by the OLT, the ONU may respond to a serial number (SN) grant of the OLT and complete the activation. If the wavelength option of the ONU does not match any of the wavelength options supported by the OLT, the ONU may generate an error indication. This avoids repeatedly attempts to activate the ONU and failures, which could lead to timeout errors and performance degradation.

In some embodiments, in addition to the upstream wavelength options, the OLT may indicate other optical communication capabilities to the ONU, including a PON mode, an upstream modulation format, and the like. The indicator may be transmitted to the ONU in the same or different messages (or downstream frames). In some embodiments, the indicator about the upstream wavelength options may be transmitted in an activation period (e.g., a parameter learning stage) of the ONU, and the indicator regarding the PON mode and the modulation format may be transmitted in the activation period or the operation period of the ONU. Alternatively, the information may be transmitted via broadcasting.

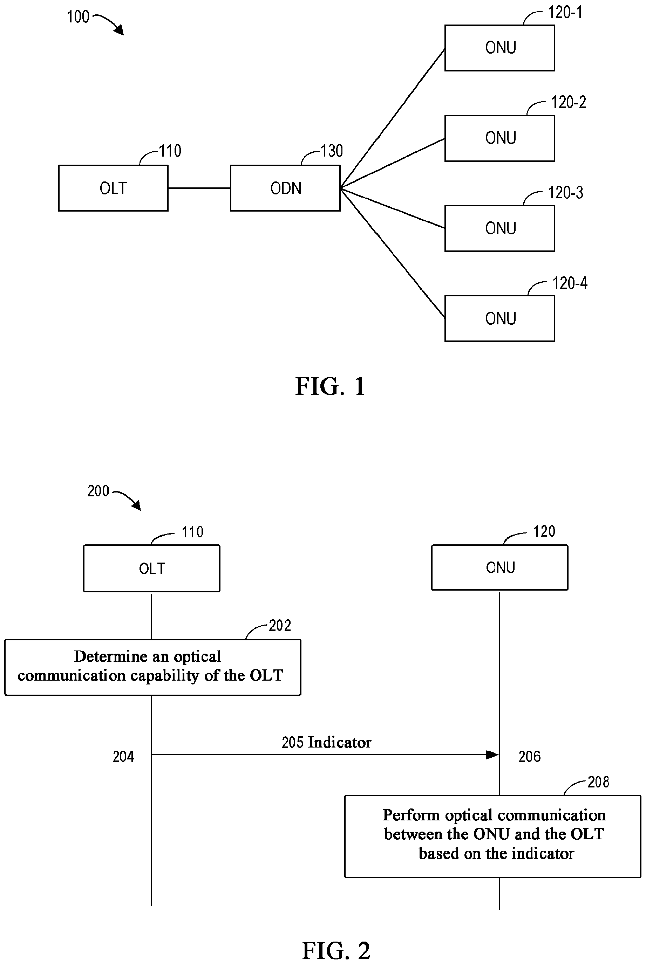

FIG. 1 illustrates a block diagram of an exemplary communication system where the embodiments of the present disclosure can be implemented. As shown in FIG. 1, the communication system 100 includes an OLT 110 and ONUs 120-1, 120-2, 120-3, 120-4 (collectively referred to as 120). The OLT 110 transmits data to the ONUs 120 through the ODN 130. The data transmission may include upstream from the ONUs 120 to the OLT 110 and downstream from the OLT 110 to the ONUs 120. It should be understood that the number of the OLT 110 and the number of the ONU shown in FIG. 1 are provided for illustrative purposes. The communication network 100 may include any suitable number of OLTs 110 and any suitable number of ONUs 120. In some embodiments, communication channels between the OLT 110 and the ONUs 120 may include a fiber optical communication channel. In some other embodiments, communication channels between the OLT 110 and the ONUs 120 may be any other form of wired or wireless channels.

In some embodiments, the communication system 100 may be a portion of a PON. The communication system 100 may be a communication system where different generations of PONs co-exist. For example, the different generations of PONs may include but are not limited to: APON, BPON, GPON, EPON, XG PON, XG(S)PON, 25G PON, 50G PON, and other existing PONs or PONs developed in the future. For the co-existing PONs, the OLT 110 and the ONU 130 may have different capabilities and work modes to adapt to the PONs.

Embodiments of the present disclosure are provided to improve the negotiation of capabilities and work modes, which will be described in detail below with reference to FIGS. 2 to 6.

FIG. 2 illustrates an example of a communication process flow 200 in accordance with some example embodiments of the present disclosure. As shown in FIG. 2, the process flow 200 between an OLT 110 and an ONU 120 in the embodiments of the present disclosure is as follows:

The OLT 110 determines 202 an optical communication capability of the OLT. The optical communication capability may include at least two wavelength options supported by the OLT 110. For example, upstream wavelength options that are supported by the OLT 110 may include Option 1, Option 2, and Option 3 mentioned above. Additionally or alternatively, the optical communication capability may further include a PON mode associated with the OLT. Additionally or alternatively, the optical communication capability may further include an upstream modulation format used by the OLT 110.

In some embodiments, the OLT 110 may have a broadband receiver and may determine the upstream wavelength options supported by the OLT according to a receiver band. The OLT 110 may determine at least two upstream wavelength options included in the receiver band as the wavelength options supported by the OLT.

The OLT 110 transmits 204, to the ONU 120, an indicator 205 indicating the optical communication capability. The indicator 205 may be implemented or encoded as messages or values of specified fields (also referred as "field") of downstream frames, such as a plurality of bits. For example, in a case of indicating the upstream wavelength options, three bits can be used to indicate the wavelength options supported by the OLT: option 1 only, option 2 only, option 3 only, option 1 and option 2, option 2 and option 3, option 1 and option 3, and option 1, option 2, and option 3 (all of them are supported). It could be understood that the wavelength options that may be supported by the OLT are not limited to the existing three options, but can further include more wavelength options developed in the future. Additionally or alternatively, the OLT 110 can further use other bits to indicate the PON mode and the upstream modulation format.

In some embodiments, the OLT 110 may transmit, via broadcasting, indicator 205 indicating the wavelength options to the ONU 120 of the communication system 100. Alternatively or additionally, the OLT 110 can further transmit, in an activation period of an ONU 120, the indicator 205 that indicates the at least two wavelength options determined. The activation period of the ONU 120 includes a parameter learning stage, a serial number obtaining stage, and a ranging stage. The indicator 205 may be transmitted in the parameter learning stage to promote serial number obtaining.

In some embodiments, the OLT 110 can include the indicator 205 about the wavelength options in a PLOAM messages or an OC body message, for example, in reserved fields or some multiplexed fields. In some embodiments, the OLT 110 can transmit the indicator by defining an individual message or a downstream frame.

Correspondingly, the ONU 120 receives 206 the indicator 205. The ONU 120 then performs 208 optical communication with the OLT 110 based on the indicator 205. In a case that the indicator 205 indicates at least two upstream wavelength options supported by the OLT 110, the ONU 120 can determine whether an upstream wavelength option supported by the ONU 120 matches one of the at least two upstream wavelength options indicated. If the wavelength option of the ONU matches one of the options (e.g., If the wavelength option of the ONU 120 falls within a range of one of the wavelength options supported by the OLT 110, the ONU 110 determines that the wavelength options are matched and may respond to serial number grant from the OLT. If the ONU 120 determines that the wavelength option of the ONU does not match any of the wavelength options supported by the OLT 110 (e.g., if the wavelength option of the ONU 120 does not fall within a range of any wavelength option supported by the OLT 110, the ONU 120 can generate an error indication. In this way, the ONU 120 can know that the OLT 110 is incompatible with it and cannot perform communication. The ONU 120 no longer repeatedly makes an attempt to perform the activation that is bound to fail (because the OLT 110 cannot parse upstream data), resulting in timeout and a decrease in performance.

In some embodiments, the OLT 110 can further indicate the ONU 120 or negotiate with the ONU 120 on the determined upstream modulation format and PON mode through the indicator 205. The OLT 110 and the ONU 120 can support various types of modulation formats, such as pulse amplitude modulation 4 (PAM4) or non-return-to-zero (NRZ). The OLT 110 can determine an upstream modulation format that is supported by the OLT and transmits, to the ONU 120, indicator 205 indicating the upstream modulation format. The indicator 205 may be transmitted in the activation period or working period of the ONU 120. Correspondingly, the ONU 120 can receive the indicator 205 and select an upstream modulation format corresponding to the indicated upstream modulation format to transmit upstream data to the OLT 110. In some embodiments, the indicator of the upstream modulation format may be transmitted in a PLOAM message, an OC body message, or an OMCI message. Alternatively, the indicator may be transmitted in a separately defined message.

The OLT 110 and the ONU 120 can work in different PON modes, such as GPON, EPON, 10G GPON, 10G EPON, 25G GPON, 25G GPON, TWDM PON, and 50G GPON. The OLT 110 transmits, to the ONU 120, the indicator 205 that indicates the determined PON mode. The indicator 205 may be transmitted in the activation period or working period of the ONU 120. Correspondingly, the ONU 120 can receive the indicator and select a PON mode corresponding to the indicated PON mode to communicate with the OLT 110. In some embodiments, the indicator of the PON mode may be transmitted in a PLOAM message or an OC body message. Alternatively, the indicator may be transmitted in a separately defined message.

It could be understood that the indications (including the indication of the wavelength option, the indication of the PON mode, and the indication of the modulation format) about the optical communication capability transmitted by the OLT 110 to the ONU 120 may be implemented separately. In other words, the OLT 110 can indicate any one or combination of the wavelength options, the PON mode, and the modulation format. Furthermore, the indicator may be transmitted in different messages or downstream frames, or may be transmitted in the same message or downstream frame.

For ease of understanding, example implementations based on the embodiments of the present disclosure are provided. In this example, the OLT is a 50G OLT. If a receiver band of the OLT is 1260-1310 nm, it can be determined that wavelength options supported by the OLT include Option 1 (1260-1280 nm), Option 2 (1290-1310 nm), and Option 3 (1284-1288 nm). In other words, the OLT can receive upstream data from three types of ONUs (each type of ONU supports one wavelength option). The ONU 120 can operate under the three wavelength options through Time Division Multiple Access (TDMA).

If a receiver band of the 50G OLT is 1260-1288 nm, the ONU may receive Option 1 (1260-1280 nm) and Option 3 (1284-1288 nm). Similarly, the ONU 120 using Option 1 and Option 3 can operate using a TDMA method.

If a receiver band of the 50G OLT is 1260-1280 and 1290-1310 nm (e.g., the OLT side has a dual pass filter with a passband of 1260-1280 nm and 1290-1310 nm), the ONU may receive Option 1 (1260-1280 nm) and Option 2 (1290-1310 nm). Similarly, the ONU using Option 1 and Option 2 can operate through TDMA.

From the perspective of a 50G PON ONU, only one upstream wavelength option is supported. When the 50G PON ONU is connected to a PON, the 50G PON ONU may learn upstream wavelength indicator and compare whether its own upstream wavelength option falls within a range supported by the OLT. If yes, the ONU may respond to serial number grant assigned by the OLT, and otherwise, the ONU does not respond to the serial number grant and may generate a local error indication, such as error printing, error logs, or displaying errors on web pages.

The ONU may further read the PON mode and select a corresponding PON format to work with. As an example, there are two combo ONUs: GPON/XG PON and GPON/XGS PON. The OLT works in an XG PON mode. When the GPON/XGS PON combo ONU is incorrectly connected to the OLT, the ONU cannot work because it works as a GPON ONU. Then, when the OLT switches to an XGS PON mode, the ONU still cannot work because it cannot obtain a 10G serial number grant. According to the embodiments of the present disclosure, the OLT may inform the ONU that the current OLT is an XGPON OLT, and thus the ONU clearly knows that it is connected to a wrong network and triggers an error connection indication without waiting for the 10G SN grant.

The following provides exemplary implementations transmitting the indicator. It should be understood that these exemplary implementations (such as exemplary messages, fields, and values provided below) are only intended to assist in understanding the embodiments of the present disclosure and not intended to limit the scope of the present disclosure. The exemplary implementations are applicable to other transformations as well. For simplicity, only part of relevant messages is shown here.

In Example 1, the indicator may be transmitted or received through a PLOAM message. For example, the indicator may be carried in one or more fields of the PLOAM message, as shown in Table 2 below.

**Table 2 Burst Profile message**

| **Octet** | **Content** | **Description** | |
|---|---|---|---|
| 1-2 | ONU-ID | Directed message to one ONU or broadcast message to all ONUs. As a broadcast to all ONUs, ONU-ID = 0x03FF. | |
| 3 | Message type ID | 0x01, "Burst_Profile" | |
| 4 | SeqNo | Unicast or broadcast PLOAM sequence number | |
| 5 | Burst profile control 1 | VVVM BBPP, where: | |
| | | M: Modulation format | |
| | | | M=0 NRZ (broadcast) |
| | | | M=1 PAM4 (unicast, PAM, or NRZ) |
| 6 | Burst profile control 2 | NNMM GGCF, where: | |
| | | GG: PON mode indicator | |
| | | | GG= 00: GPON |
| | | | GG = 01: XG PON |
| | | | GG= 10: XGS GPON |
| | | | GG = 11: 50GPON |
| 7 | upstream wavelength indicator | UUUR RRDD, where: | |
| | | UUU: Upstream wavelength indicator | |
| | | | UUU=000: upstream wavelength option 1 is supported |
| | | | UUU=001: upstream wavelength option 2 is supported |
| | | | UUU=010: upstream wavelength option 3 is supported |
| | | | UUU=011: upstream wavelength options 1 and 2 are supported |
| | | | UUU=100: upstream wavelength options 1 and 3 are supported |
| | | | UUU=101: upstream wavelength options 2 and 3 are supported |
| | | | UUU=110: upstream wavelength options 1, 2, and 3 are supported |
| ... | ... | | ... |

Example 2: The indicator may be transmitted and received via a customized message

**Table 3 Capability indicator message**

| **Octet** | **Content** | **Description** | |
|---|---|---|---|
| 1-2 | ONU-ID | Directed message to one ONU or broadcast message to all ONUs. As a broadcast to all ONUs, ONU-ID = 0x03FF. | |
| 3 | Message type ID | 0x20, "upstream wavelength indicator". | |
| 4 | SeqNo | Unicast or broadcast PLOAM sequence number | |

| **Octet** | **Content** | **Description** | |
|---|---|---|---|
| 5 | Upstream wavelength indicator PON mode indicator Modulation format indicator | UUUGGMRR, where: | |
| | | UUU: "upstream wavelength indicator" | |
| | | | UUU=000: upstream wavelength option 1 is supported |
| | | | UUU=001: upstream wavelength option 2 is supported |
| | | | UUU=010: upstream wavelength option 3 is supported |
| | | | UUU=011: upstream wavelength options 1 and 2 are supported |
| | | | UUU=100: upstream wavelength options 1 and 3 are supported |
| | | | UUU=101: upstream wavelength options 2 and 3 are supported |
| | | | UUU=110: upstream wavelength options 1, 2, and 3 are supported |
| | | GG: PON mode indicator | |
| | | | GG = 00: GPON |
| | | | GG = 01: XG PON |
| | | | GG = 10: XGS GPON |
| | | | GG = 11: 50GPON |
| | | M: modulation format indicator. | |
| | | | M=0 NRZ |
| | | | M= 1 PAM4 |
| | | R: reserve | |
| ... | ... | ... | |

Example 3: The indicator may be transmitted and received via an OC body message. A combination of two bits (e.g. two bits of Link Type) in field PON-ID TYPE (PIT) of the OC body message (e.g. refer to ITU-U G9804.2(21)) and field R (one bit) of the OC body message may be used to indicate an upstream wavelength option. A correspondence relationship between a value of this combination and the indicated wavelength options can be found in Example 1 and Example 2. Additionally or alternatively, six bits of field "administration label" of the OC body message may be used to indicate the upstream wavelength option, the PON mode, and the modulation format of the OLT. For example, the six bits are denoted as "UUUGGM", where "UUU" is used to indicate the upstream wavelength options; "GG" is used to indicate the PON mode; and "M" is used to indicae the modulation mode. A correspondence relationship between values of the above bits and the indicated information can be found in Example 1 and Example 2.

Example 4: The indicator may be transmitted and received via an ONU management control interface (OMCI). As an example, the OMCI message can include a management entity identifier, a modulation format (e.g. "0" indicates NRZ, and "1" indicates PAM4), an SFC value used to indicate switching time, and a superframe counter.

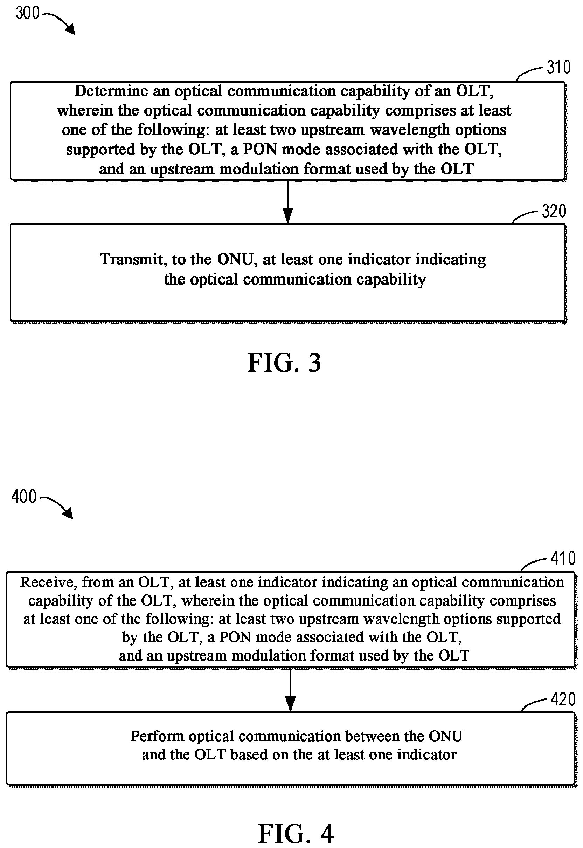

FIG. 3 illustrates a flowchart of a method 300 implemented at an OLT according to some embodiments of the present disclosure. In some embodiments, the method 300 may be implemented at the OLT 110 in FIG. 1. In other embodiments, the method 300 may be implemented at any other OLTs or another device with similar functions.

At block 310, the OLT 110 determines an optical communication capability of the OLT 110. The optical communication capability includes at least one of the following: at least two upstream wavelength options supported by the OLT 110, a PON mode associated with the OLT 110, and an upstream modulation format used by the OLT 110. At block 320, the OLT 110 transmits, to the ONU 120, at least one indicator indicating the optical communication capability.

In some embodiments, determining an optical communication capability of the OLT may comprise: determining, based on a receiver band of the OLT, the at least two upstream wavelength options within the receiver band. In some embodiments, transmitting, to the ONU, the at least one indicator indicating the optical communication capability may comprise transmitting an indicator indicating the at least two upstream wavelength options within an activation period of the ONU or via broadcasting.

In some embodiments, transmitting, to the ONU, the at least one indicator indicating the optical communication capability may comprise: transmitting an indicator indicating at least one of the PON mode and the upstream modulation format within an activation period or an operation period of the ONU, or via broadcasting.

In some embodiments, the at least one indicator may be transmitted via at least one of the following: a PLOAM message; an OC body message; and an OMCI message.

FIG. 4 illustrates a flowchart of a method 400 implemented at an ONU according to some embodiments of the present disclosure. In some embodiments, the method 400 may be implemented at the ONU 120 in FIG. 1. In other embodiments, the method 400 may be implemented at any other ONUs or another device with similar functions.

At block 410, the ONU 120 receives at least one indicator from the OLT 110. The at least one indicator indicates an optical communication capability of the OLT 110. The optical communication capability may include at least one of the following: at least two upstream wavelength options supported by the OLT 110, a PON mode associated with the OLT 110, and an upstream modulation format used by the OLT 110. At block 420, the ONU 120 performs optical communication between the ONU 120 and the OLT 110 based on the at least one indicator.

In some embodiments, performing the optical communication between the ONU and the OLT may comprise: performing an activation procedure of the ONU based on comparison between an upstream wavelength option supported by the ONU and the at least two upstream wavelength options.

In some embodiments, performing the activation procedure of the ONU may comprise: responding to a serial number grant based on determining that the upstream wavelength option supported by the ONU matches one of the at least two upstream wavelength options; or, generating an error indication based on determining that the upstream wavelength option supported by the ONU does not match any of the at least two upstream wavelength options.

In some embodiments, receiving the at least one indicator from the OLT may comprise: receiving an indicator indicating the at least two upstream wavelength options within an activation period of the ONU or via broadcasting.

In some embodiments, performing the optical communication between the ONU and the OLT may comprise: selecting, from a plurality of PON modes supported by the ONU, a PON mode corresponding to the indicated PON mode for communication with the OLT.

In some embodiments, performing the optical communication between the ONU and the OLT may comprise: selecting, from a plurality of upstream modulation formats supported by the ONU, an upstream modulation format corresponding to the indicated upstream modulation format for transmission of upstream data to the OLT.

In some embodiments, receiving the at least one indicator from the OLT may comprise receiving an indicator indicating at least one of the PON mode and the upstream modulation format within an activation period or an operation period of the ONU, or via broadcasting.

In some embodiments, the at least one indicator may be received via at least one of the following: a PLOAM message; an OC body message; or an OMCI message.

In some exemplary embodiments, an apparatus that implements the method 300 (for example, at the OLT 110) may comprise means for implementing all the steps of the method 300. The means may be implemented in any suitable form. For example, the means may be implemented in a circuitry or software module.

In some exemplary embodiments, the apparatus may comprise means for determine an optical communication capability of an OLT. The optical communication capability includes at least one of the following: at least two upstream wavelength options supported by the OLT, a PON mode associated with the OLT, and an upstream modulation format used by the OLT. The apparatus may further include means for transmitting, to an ONU, at least one indicator indicating the optical communication capability.

In some embodiments, the means for determining the optical communication capability of an OLT may comprise means for determining, based on a receiver band of the OLT, the at least two upstream wavelength options within in the receiver band. In some embodiments, means for transmitting, to the ONU, the at least one indicator indicating the optical communication capability may comprise means for transmitting an indicator indicating the at least two upstream wavelength options within an activation period of the ONU or via broadcasting.

In some embodiments, the means for transmitting, to the ONU, at least one indicator indicating the optical communication capability may comprise means for transmitting an indicator indicating at least one of the PON mode and the upstream modulation format within an activation period or an operation period of the ONU or via broadcasting.

In some embodiments, the at least one indicator may be transmitted via at least one of the following: a PLOAM message; an OC body message; or an OMCI message.

In some embodiments, the apparatus further includes means for implementing other steps in some embodiments of the method 300. In some embodiments, the apparatus includes at least one processor and at least one memory storing computer program codes. The at least one memory and the computer program codes are configured to work together with the at least one processor to facilitate the execution of the apparatus.

In some exemplary embodiments, an apparatus that implements the method 400 (for example, at the ONU 120) may comprise means for implementing all the steps of the method 400. The means may be implemented in any suitable form. For example, the means may be implemented in a circuitry or software module.

The apparatus may comprise means for receiving, at an ONU, at least one indicator from an OLT. The at least one indicator indicates an optical communication capability of the OLT. The optical communication capability may comprise at least one of the following: at least two upstream wavelength options supported by the OLT, a PON mode associated with the OLT, and an upstream modulation format used by the OLT. The apparatus may further include means for performing optical communication between the ONU and the OLT based on the at least one indicator.

In some embodiments, the means for performing the optical communication between the ONU and the OLT may comprise means for performing an activation procedure of the ONU based on comparison between an upstream wavelength option supported by the ONU and the at least two upstream wavelength options.

In some embodiments, the means for performing an activation procedure of the ONU may comprise: a component configured to respond to a serial number grant based on determining that the upstream wavelength option supported by the ONU matches one of the at least two upstream wavelength options; and means for generating an error indication based on determining that the upstream wavelength option supported by the ONU does not match any of the at least two upstream wavelength options.

In some embodiments, the means for receiving the at least one indicator from an OLT may comprise means for receiving an indicator indicating the at least two upstream wavelength options within an activation period of the ONU or via broadcasting.

In some embodiments, the means for performing the optical communication between the ONU and the OLT may comprise means for selecting, from a plurality of PON modes supported by the ONU, a PON mode corresponding to the indicated PON mode for communication with the OLT.

In some embodiments, the means for performing the optical communication between the ONU and the OLT may comprise means for selecting, from a plurality of upstream modulation formats supported by the ONU, an upstream modulation format corresponding to the indicated upstream modulation forma for transmission of upstream data to the OLT.

In some embodiments, the means for receiving the at least one indicator from the OLT may comprise means for receiving an indicator indicating at least one of the PON mode and the upstream modulation format within an activation period or an operation period of the ONU or via broadcasting.

In some embodiments, the at least one indicator may be received via at least one of the following: a PLOAM message; an OC body message; and an OMCI message.

In some embodiments, the apparatus further includes means for implementing other steps in some embodiments of the method 400. In some embodiments, the apparatus may include at least one processor and at least one memory storing computer program codes. The at least one memory and the computer program codes are configured to work together with the at least one processor to facilitate the execution of the apparatus.

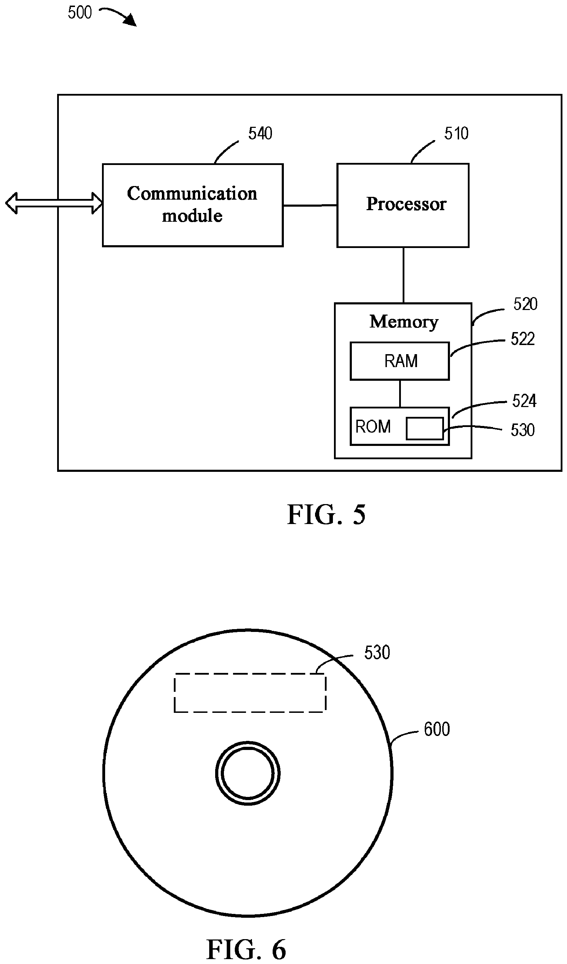

FIG. 5 is a simplified block diagram of an electronic device 500 suitable for implementing the embodiments of the present disclosure. The device 500 may be provided to implement a communication device, such as the OLT 110 and the ONU 120 as shown in FIG. 1. As shown in the figure, the device 500 includes one or more processors 510. One or more memories 520 are coupled to the processors 510, and one or more communication modules 540 are coupled to the processors 510.

The communication modules 540 are configured for bidirectional communication. For example, the communication modules 540 may include a transmitter, a receiver, or a transceiver in the embodiments of the present disclosure. A communication interface can represent any interface necessary for communication with other network elements.

The processors 510 may be of any type suitable for a local technology network and may include, but not limited to, one or more of a general-purpose computer, a specialized computer, a microcontroller, a digital signal controller (DSP), and a controller-based multi-core controller architecture. The device 500 may have a plurality of processors, such as a dedicated integrated circuit chip, which are temporally subordinate to a clock synchronized with a main processor.

The memories 520 may include one or more non-volatile memories and one or more volatile memories. Examples of the non-volatile memories include but are not limited to a read-only memory (ROM) 524, an erasable programmable read-only memory (EPROM), a flash memory, a hard disk drive, compact disc (CD), a digital video disc (DVD), and other magnetic and/or optical storage. Examples of the volatile memories include but are not limited to a random access memory (RAM) 522 and other volatile memories that will not persist during power outage.

Computer programs 530 include computer-executable instructions executed by an associated processor 510. The programs 530 can be stored in the ROM 520. The processor 510 can perform any appropriate actions and processing by loading the programs 530 into the RAM 520.

The embodiments of the present disclosure can be implemented with the help of the programs 530, so that the device 500 can execute any process of the present disclosure as discussed with reference to FIG. 2 to FIG. 4. The embodiments of the present disclosure can also be implemented through hardware or a combination of software and hardware.

In some embodiments, the programs 530 may be tangibly included in a computer-readable medium, and the computer-readable medium may be included in the device 500 (such as in the memory 520) or other storage devices accessible by the device 500. The programs 530 can be loaded from the computer-readable medium to the RAM 522 for being run. The computer-readable medium can include any type of tangible non-volatile memory, such as the ROM, the EPROM, the flash memory, the hard disk drive, the CD, the DVD, and the like.

FIG. 6 shows an example of a computer-readable medium 600 in the form of CD or DVD. A program 530 is stored on the computer-readable medium.

Generally, the various embodiments the present disclosure can be implemented in hardware or dedicated circuits, software, logic, or any combination thereof. Some aspects can be implemented in hardware, while other aspects can be implemented in firmware or software that can be executed by controllers, microprocessors, or other computing devices. Although various aspects of the embodiments of the present disclosure are illustrated and described as block diagrams, flowcharts, or using some other diagrams, it should be understood that blocks, apparatuses, systems, techniques, or methods described herein may be implemented as, for example, non-limiting examples, hardware, software, firmware, dedicated circuits or logic, general-purpose hardware or controllers or other computing devices, or a combination thereof.

The present disclosure further provides at least one computer program product that is tangibly stored on a non-transient computer-readable storage medium. The computer program product includes computer-executable instructions, such as instructions included in program modules, which are executed on a device on a real or virtual processor of a target to implement the above methods 300 and 400 with reference to FIG. 3 and FIG. 4. Usually, the program modules include routines, programs, libraries, objects, classes, components, data structures, and the like that perform specific tasks or achieve specific abstract data types. In various embodiments, functions of the program modules can be combined or divided between the program modules as needed. Machine-executable instructions for the program modules can be executed locally or in distributed devices. In the distributed devices, the program modules can be located on both local and remote storage media.

The program codes for implementing the methods of the present disclosure may be written by using one or more programming languages. These computer program codes may be provided to a processor of a general-purpose computer, a special-purpose computer, or another programmable data processing apparatus, so that the program codes, when executed by the computer or the another programmable data processing apparatus, implement the functions/operations specified in the flowcharts and/or block diagrams. The program codes can be executed entirely on a computer, partially on a computer, as a standalone software package, partially on a computer and partially on a remote computer, or entirely on a remote computer or server.

In the context of the present disclosure, the computer program codes or related data may be carried by any appropriate carrier to enable devices, apparatuses, or processors to perform the various processing and operations described above. Examples of the carrier include signals, computer-readable media, and the like. Examples of the signals can include electrical signals, optical signals, radio signals, sound signals, or other forms of propagation signals, such as carrier waves and infrared signals.

The computer-readable medium can be any tangible medium that contains or stores programs used for or related to instruction execution systems, apparatuses, or devices. The computer-readable medium can be a computer-readable signal medium or a computer-readable storage medium. The computer-readable medium may include but is not limited to electronic, magnetic, optical, electromagnetic, infrared, or semiconductor systems, apparatuses, or devices, or any suitable combination thereof. More detailed examples of the computer-readable storage medium include electrical connections of one or more wires, a portable computer disk, a hard disk drive, a RAM, a ROM, an EPROM or flash memory, an optical storage device, a magnetic storage device, or any suitable combination thereof. The term "non-transient" herein limits the medium itself (namely, it is tangible rather than a signal), instead of limiting the data storage persistence (such as the RAM and the ROM).

In addition, although the operations of the methods of the present disclosure are described in a specific order in the accompanying drawings, this does not require or imply that these operations need to be performed in this specific order, or that all the shown operations need to be performed to achieve desired results. On the contrary, the order of execution of the steps depicted in the flowcharts can be changed. Additionally or alternatively, some steps can be omitted; multiple steps can be combined into one step for execution; and/or a step can be decomposed into multiple steps for execution. It should also be noted that features and functions of two or more apparatuses of the present disclosure can be concretized in one apparatus. On the contrary, the features and functions of an apparatus described above can be further divided into multiple apparatuses for concretization.

Although several specific embodiments have been referred to describe the present disclosure, it should be understood that the present disclosure is not limited to the specific embodiments disclosed. The present disclosure aims to cover various modifications and equivalent arrangements included in the spirit and scope of the attached claims.
FIG. 2
   202: Determine an optical communication capability of the OLT
   205: Indicator
   208: Perform optical communication between the ONU and the OLT based on the indicator
FIG. 3
   310: Determine an optical communication capability of an OLT, wherein the optical communication capability comprises at least one of the following: at least two upstream wavelength options supported by the OLT, a PON mode associated with the OLT, and an upstream modulation format used by the OLT
   320: Transmit, to the ONU, at least one indicator indicating the optical communication capability
FIG. 4
   410: Receive, from an OLT, at least one indicator indicating an optical communication capability of the OLT, wherein the optical communication capability comprises at least one of the following: at least two upstream wavelength options supported by the OLT, a PON mode associated with the OLT, and an upstream modulation format used by the OLT
   420: Perform optical communication between the ONU and the OLT based on the at least one indicator
FIG 5
   540: Communication module
   510: Processor
   520: Memory

## Claims

1. An optical line terminal, OLT, (110), comprising:
at least one processor (510); and
at least one memory (520) storing instructions (530) which, when executed by the at least one processor (510), cause the OLT (110) to at least:
determine (202) an optical communication capability of the OLT (110), wherein the optical communication capability comprises at least one of the following: at least two upstream wavelength options supported by the OLT (110), a passive optical network, PON, mode associated with the OLT (110), and an upstream modulation format used by the OLT (110); and
transmit (204), to an optical network unit, ONU, (120) at least one indicator (205) indicating the optical communication capability.

2. The OLT (110) of claim 1, wherein to determine (202) the optical communication capability of the OLT (110), the OLT (110) is caused to:
determine, based on a receiver band of the OLT (110), the at least two upstream wavelength options within the receiver band.

3. The OLT (110) of claim 1 or 2, wherein to transmit (204), to the ONU (120), the at least one indicator (205) indicating the optical communication capability, the OLT (110) is caused to:
transmit an indicator indicating the at least two upstream wavelength options within an activation period of the ONU (120) or via broadcasting.

4. The OLT (110) of any of claims 1 to 3, wherein to transmit (204), to the ONU (120), the at least one indicator (205) indicating the optical communication capability, the OLT (110) is caused to:
transmit an indicator indicating at least one of the PON mode and the upstream modulation format within an activation period or an operation period of the ONU (120) or via broadcasting.

5. The OLT (110) of any of claims 1 to 4, wherein the at least one indicator (205) is transmitted via at least one of the following:
a physical layer operation administration and maintenance, PLOAM, message;
an operation control, OC, body message; or
an ONU management control interface, OMCI, message.

6. An optical network unit, ONU, (120) comprising:
at least one processor (510); and
at least one memory (520), wherein the at least one memory (520) stores instructions (530), and the instructions (530), when executed by the at least one processor (510), cause the ONU (120) to at least:
receive (206), from an optical line terminal, OLT, (110), at least one indicator (205) indicating an optical communication capability of the OLT (110), wherein the optical communication capability comprises at least one of the following: at least two upstream wavelength options supported by the OLT (110), a passive optical network, PON, mode associated with the OLT (110), and an upstream modulation format used by the OLT (110); and
perform (208) optical communication between the ONU (120) and the OLT (110) based on the at least one indicator (205).

7. The ONU (120) of claim 6, wherein to perform (208) the optical communication between the ONU (120) and the OLT (110), the ONU (120) is caused to:
perform an activation procedure of the ONU (120) based on comparison between an upstream wavelength option supported by the ONU (120) and the at least two upstream wavelength options.

8. The ONU (120) of claim 7, wherein to perform the activation procedure of the ONU (120), the ONU (120) is caused to:
respond to a serial number grant based on determining that the upstream wavelength option supported by the ONU (120) matches one of the at least two upstream wavelength options; or,
generate an error indication based on determining that the upstream wavelength option supported by the ONU (120) does not match any of the at least two upstream wavelength options.

9. The ONU (120) of any of claims 6 to 8, wherein to receive (206), from the OLT (110), the at least one indicator (205), the ONU (120) is caused to:
receive an indicator indicating the at least two upstream wavelength options within an activation period of the ONU (120) or via broadcasting.

10. The ONU (120) of any of claims 6 to 9, wherein A) to perform (208) the optical communication between the ONU (120) and the OLT (110), the ONU is caused to:
select, from a plurality of PON modes supported by the ONU (120), a PON mode corresponding to the indicated PON mode, for communication with the OLT (110), and/or
wherein B) to perform (208) the optical communication between the ONU (120) and the OLT (110), the ONU (120) is caused to:
select, from a plurality of upstream modulation formats supported by the ONU (120), an upstream modulation format corresponding to the indicated upstream modulation format, for transmission of upstream data to the OLT (110), and/or
wherein C) to receive (206), from an OLT (110), the at least one indicator (205), the ONU (120) is caused to:
receive an indicator indicating at least one of the PON mode and the upstream modulation format within an activation period or an operation period of the ONU (120) or via broadcasting, and/or
wherein D) the at least one indicator (205) is received via at least one of the following:
a physical layer operation administration and maintenance, PLOAM, message;
an operation control, OC, body message; or
an ONU (120) management control interface, OMCI, message.

11. A communication method, comprising:
determining (202), at an optical line terminal, OLT (110), an optical communication capability of the OLT (110), wherein the optical communication capability comprises at least one of the following: at least two upstream wavelength options supported by the OLT (110), a passive optical network, PON, mode associated with the OLT (110), and an upstream modulation format used by the OLT; and
transmitting (204), to an optical network unit, ONU, (120) at least one indicator (205) indicating the optical communication capability.

12. A communication method, comprising:
receiving (206), at an optical network unit, ONU, (120) and from an optical line terminal, OLT, (110) at least one indicator (205) indicating an optical communication capability of the OLT (110), wherein the optical communication capability comprises at least one of the following: at least two upstream wavelength options supported by the OLT (110), a passive optical network, PON, mode associated with the OLT (110), and an upstream modulation format used by the OLT (110); and
performing (208) optical communication between the ONU (120) and the OLT (110) based on the at least one indicator (205).

13. A communication apparatus, comprising:
means for determining (202), at an optical line terminal, OLT, (110) an optical communication capability of the OLT (110), wherein the optical communication capability comprises at least one of the following: at least two upstream wavelength options supported by the OLT (110), a passive optical network, PON, mode associated with the OLT (110), and an upstream modulation format used by the OLT (110); and
means for transmitting (204), to an optical network unit, ONU, (120) at least one indicator (205) indicating the optical communication capability.

14. A communication apparatus, comprising:
means for receiving (206), at an optical network unit, ONU, (120) and from an optical line terminal, OLT, (110) at least one indicator indicating an optical communication capability of the OLT (110), wherein the optical communication capability comprises at least one of the following: at least two upstream wavelength options supported by the OLT (110), a passive optical network, PON, mode associated with the OLT (110), and an upstream modulation format used by the OLT (110); and
means for performing (208) optical communication between the ONU (120) and the OLT (110) based on the at least one indicator (205).

15. A computer-readable medium having instructions stored thereon, wherein the instructions, when executed by a device, cause the device to at least:
determine (202), at an optical line terminal, OLT, (110) an optical communication capability of the OLT (110), wherein the optical communication capability comprises at least one of the following: at least two upstream wavelength options supported by the OLT (110), a passive optical network, PON, mode associated with the OLT (110), and an upstream modulation format used by the OLT (110); and
transmit (204), to an optical network unit, ONU, (120) at least one indicator (205) indicating the optical communication capability.

16. A computer-readable medium having instructions stored thereon, wherein the instructions, when executed by a device, cause the device to at least:
receive (206), at an optical network unit, ONU, (120) and from an optical line terminal, OLT, (110) at least one indicator (205) indicating an optical communication capability of the OLT (110), wherein the optical communication capability comprises at least one of the following: at least two upstream wavelength options supported by the OLT (110), a passive optical network, PON, mode associated with the OLT (110), and an upstream modulation format used by the OLT (110); and
perform (208) optical communication between the ONU and the OLT (110) based on the at least one indicator (205).
